# EUROPÄISCHE PATENTSCHRIFT

(11) **EP 4 139 248 B1**
(45) Veröffentlichungstag und Bekanntmachung des Hinweises auf die Patenterteilung: **17.07.2024**
(21) Anmeldenummer: 21721007.9
(22) Anmeldetag: 19.04.2021
(51) Int. Cl.: C01B 25/26, C08K 3/32, C01B 25/37

(54) **VERWENDUNG EINES ZUSATZES BEI DER ERZEUGUNG VON KUPFER(II)-HYDROXID-PHOSPHAT**
USE OF AN ADDITIVE IN THE PRODUCTION OF COPPER(II) HYDROXIDE PHOSPHATE
UTILISATION D'UN ADDITIF DANS LA PRODUCTION DE PHOSPHATE D'HYDROXYDE DE CUIVRE (II)

(30) Priorität: 23.04.2020 DE 102020111158
(43) Veröffentlichungstag der Anmeldung: 01.03.2023
(73) Patentinhaber: Chemische Fabrik Budenheim KG, 55257 Budenheim (DE)
(72) Erfinder: LITTERSCHEID, Christian, 55270 Ober-Olm (DE); WISSEMBORSKI, Rüdiger, 16816 Neuruppin (DE); WELSCH-PAPENBREER, Franziska, 55425 Waldalgesheim (DE); GARCIA MARTINEZ, David, 50013 Zaragoza (ES)
(74) Vertreter: WSL Patentanwälte Partnerschaft mbB
(86) Internationale Anmeldenummer: PCT/EP2021/060027
(87) Internationale Veröffentlichungsnummer: WO 2021/213956

(56) Entgegenhaltungen:
- WO-A1-2018/178022
- DE-A1- 19 543 803
- DATABASE WPI Week 199912, Derwent World Patents Index; AN 1999-132963
- HAN JIAN ET AL: "Cu2(OH)PO4pretreated by composite surfactants for the micro-domino effect: A high-efficiency Fenton catalyst for the total oxidation of dyes", MATERIALS LETTERS, ELSEVIER, AMSTERDAM, NL, vol. 166, 11 December 2015 (2015-12-11), pages 71 - 74, XP029400093, ISSN: 0167-577X, DOI: 10.1016/J.MATLET.2015.12.046
- DATABASE WPI Week 201835, Derwent World Patents Index; AN 2018-16346L, XP002803579

## Beschreibung

### GEGENSTAND DER ERFINDUNG

Die Erfindung betrifft ein Verfahren zur Herstellung von Kupfer(II)-hydroxid-phosphat unter Zusatz eines Chelatbildners, ein Kupfer(II)-hydroxid-phosphat erhältlich durch dieses Verfahren sowie die Verwendung eines Chelatbildners bei der Erzeugung von Kupfer(II)-hydroxid-phosphat.

### HINTERGRUND DER ERFINDUNG

Kupfer(II)-hydroxid-phosphat, das in der Literatur auch als basisches Kupferphosphat bezeichnet wird, wird u.a. als Kunststoffadditiv zu verschiedenen Zwecken verwendet. Beispielsweise wird es gemäß den deutschen Offenlegungsschriften Nr. 3 917 294 A1 und 4 136 994 A1 Kunststoffen zugemischt, um sie mittels Laserstrahlen beschriftbar zu machen.

Aus dem Stand der Technik sind im Wesentlichen zwei Verfahren zur Herstellung von Kupfer(II)-hydroxid-phosphat bekannt, nämlich die Umsetzung einer wässrigen Dispersion einer Kupfervorläuferverbindung mit Phosphorsäure unter Normaldruck und die Hydrothermalsynthese, bei der ausgehend von einer Kupfervorläuferverbindung und einem Phosphatsalz die Umsetzung unter erhöhtem Druck erfolgt.

Unter Hydrothermalsynthese versteht man eine größtenteils heterogene Reaktion in wässrigem Medium oberhalb von 100°C und 1 bar in einem geschlossenen Reaktionsgefäß. Bei diesen Bedingungen gehen sonst schwerlösliche Stoffe als Komplexe in Lösung. In diesem Zusammenhang ist es bekannt, der wässrigen Reaktionsmischung Additive zuzusetzen, um die Struktur des Reaktionsprodukts Kupfer(II)-hydroxid-phosphat zu beeinflussen.

Beispielsweise beschreibt Zhao et al., Int. J. Electrochem. Sci. 8 (2013) 490-593 die Hydrothermalsynthese von Kupfer(II)-hydroxid-phosphat ausgehend von CuSO₄*5 H₂O und (NH₄)₂HPO₄. Das Herstellverfahren wird bei einer Temperatur von 160-200°C und unter Zusatz des Additivs Natriumdodecylbenzolsulfonat für 24 h durchgeführt. Es werden Cu₂(OH)PO₄-Superstrukturen mit walnussförmiger Ausgestaltung und einer Größe von 3-4 µm erhalten.

Han et al., Materials Letters 166 (2016) 71-74 beschreibt die Hydrothermalsynthese von Kupfer(II)-hydroxid-phosphat ausgehend von Cu(NO₃)₂ und Na₂HPO₄. Das Herstellverfahren wird bei einer Temperatur von 120°C und unter Zusatz von Natriumdodecylbenzolsulfonat und Polyvinylpyrrolidon durchgeführt. Es werden elliptisch geformte Cu₂(OH)PO₄-Kristalle erhalten.

DE 195 43 803 A1 beschreibt ein Verfahren zur Herstellung von Kupfer(II)-hydroxid-phosphat das drucklos erfolgt in dem keine Komplex-Bildner eingesetzt werden.

CN 1 197 690 A D5 offenbart ein Hydrothermalverfahren zur Herstellung von Kupfer(II)-hydroxid-phosphat unter Verwendung von Komplexbildnern, das daher nicht drucklos durchgeführt wird.

Hu et al., Journal of Alloys and Compounds 695 (2017) 561-566 betrifft die Hydrothermalsynthese von Kupfer(II)-hydroxid-phosphat ausgehend von Cu(CH₃COO)₂ und Diammoniumhydrogenphosphat. Das Herstellverfahren wird bei einer Temperatur von 120°C und unter Zusatz von Polyethylenglykol für 6 h durchgeführt. Es werden rosen-, stab-, oder ziegelförmige Cu₂(OH)PO₄-Kristalle erhalten.

Wie bereits erläutert, sind aus dem Stand der Technik jedoch auch Verfahren zur Herstellung von Kupfer(II)-hydroxid-phosphat bekannt, die nicht das Arbeiten unter Druck erfordern, d.h. drucklos ablaufen. Diese haben den Vorteil eines geringeren präparativen Aufwands, da nicht in Autoklaven gearbeitet werden muss. Weiterhin sind diese in der Regel deutlich schneller und/oder können bei niedrigeren Reaktionstemperaturen durchgeführt werden.

Beispielsweise beschreibt die DE OS 3 342 292 ein Verfahren, bei dem man basisches Kupfercarbonat in wässriger Dispersion mit mindestens stöchiometrischen Mengen Phosphorsäure bei Temperaturen unterhalb 70°C behandelt, die entstandene Reaktionsmischung im gleichen Temperaturbereich mechanisch weiterbewegt, dann kurzzeitig auf Siedetemperatur erhitzt und schließlich das entstandene Kupfer(II)-hydroxid-phosphat abtrennt. Dieses Verfahren weist jedoch nicht nur sehr lange Reaktionszeiten von > 10 h auf, je nach Rohstoffqualität werden Produkte mit starken Abweichungen im Farbton erhalten. Wünschenswert ist jedoch ein nahezu farbloses Produkt mit gleichförmigem Farbton, insbesondere für den Anwendungsbereich Kunststoffadditive.

Die DE 19 543 803 beschreibt ein Verfahren, bei dem zu einer wässrigen Dispersion von Kupfer(II)-hydroxid 85%-ige Phosphorsäure zugesetzt wird, das Reaktionsgemisch circa 1 h bei 50°C stehengelassen und dann 1 h zum Sieden erhitzt wird. Nach Abkühlen wird das entstandene Produkt abfiltriert und getrocknet. Das Verfahren ermöglicht die Gewinnung von Kupfer(II)-hydroxid-phosphat in einem verhältnismäßig einfachen und kostengünstigen Prozess. Allerding kann die Morphologie des Kupfer(II)-hydroxid-phosphats mit diesem Verfahren nicht beeinflusst werden. Darüber hinaus ist die Farbe des erhaltenen Produkts zwar verhältnismäßig hell, allerdings weist das Kupfer(II)-hydroxid-phosphat (im Folgenden "KHP") immer noch eine leicht-grüne Färbung auf.

Für einige Anwendungsbereiche des Kupfer(II)-hydroxid-phosphats kann es jedoch vorteilhaft sein, dessen Morphologie und spezifische Oberfläche gezielt zu steuern. Beispielsweise hängen biologische und/oder katalytische Eigenschaften einer Verbindung regelmäßig von deren Struktur und/oder spezifischen Oberfläche ab. Weiterhin ist es gewünscht, Kupfer(II)-hydroxid-phosphat mit bestimmten Färbungswerten, insbesondere geringer Eigenfärbung und hoher Helligkeit, zu erhalten. Dies ist besonders vorteilhaft, wenn Kupfer(II)-hydroxid-phosphat als Additiv einer Zusammensetzung, insbesondere einer Kunststoffzusammensetzung, zugefügt wird.

Zwar können, wie oben dargestellt, bestimmte Morphologien des Kupfer(II)-hydroxid-phosphats durch die Herstellung mittels Hydrothermalsynthese erhalten werden, allerdings erfordert dies das Arbeiten in Druckgefäßen (Autoklaven) und bei Temperaturen > 100°C, meist sogar das Arbeiten über dem kritischen Punkt des Wassers.

### AUFGABE

Vor diesem Hintergrund bestand die Aufgabe der vorliegenden Erfindung daher darin, ein druckloses Verfahren zur Herstellung von Kupfer(II)-hydroxid-phosphat bereitzustellen, mit dem die Morphologie und/oder spezifische Oberfläche des Produkts beeinflusst werden kann und welches die Herstellung von Kupfer(II)-hydroxid-phosphat mit höherer Helligkeit und/oder geringerer Eigenfärbung als die aus dem Stand der Technik bekannten Verfahren ermöglicht.

### BESCHREIBUNG DER ERFINDUNG

Diese Aufgabe wird erfindungsgemäß gelöst durch ein Verfahren zur Herstellung von Kupfer(II)-Hydroxid-Phosphat mit den folgenden Verfahrensschritten:
a) Erzeugung eines Reaktionsgemisches aus einer wässrigen Lösung oder Dispersion einer Kupfer(II)-Verbindung und einer vorzugsweise mindestens stöchiometrischen Menge Phosphorsäure, wobei mindestens stöchiometrisch bedeutet, dass die Stoffmenge von Kupfer(II)-Ionen der Kupfer(II)-Verbindung zu Stoffmenge Phosphorsäure im Reaktionsgemisch höchstens 2 beträgt,
b) Umsetzung der Kupfer(II)-Verbindung mit der Phosphorsäure in dem Reaktionsgemisch und
c) Abtrennung von Kupfer(II)-Hydroxid-Phosphat aus dem Reaktionsgemisch,

wobei die Umsetzung in Schritt b) drucklos erfolgt, und das Verfahren
dadurch gekennzeichnet ist, dass
dem Reaktionsgemisch im Verfahrensschritt a) und/oder b) ein Chelatbildner zugesetzt wird.

In einer bevorzugten Ausführungsform der Erfindung beträgt das Verhältnis der Stoffmenge von Kupfer-(II)-Ionen der Kupfer-(II)-Verbindung zu Stoffmenge der Phosphorsäure im Reaktionsgemisch höchstens 5, vorzugsweise höchstens 3, noch bevorzugter höchstens 2,5 und am bevorzugtesten höchstens 2. Ein Verhältnis von 2 entspricht einer stöchiometrischen Menge von Phosphorsäure, dies bedeutet, dass Phosphationen im Vergleich zu Kupfer(II)-Ionen im Reaktionsgemisch in einem Verhältnis wie im Produkt KHP (Cu₂(OH)PO₄) vorliegen, durch ein solches Verhältnis kann eine besonders schnelle und effiziente Bildung des Produkts erfolgen. Da Phosphorsäure im Vergleich zur Kupfer-(II)-Verbindung kostengünstiger ist, ist in einer vorteilhaften Ausführung das Verhältnis von Stoffmenge von Kupfer-(II)-Ionen der Kupfer-(II)-Verbindung zu Stoffmenge der Phosphorsäure höchstens 2, bevorzugt höchstens 1,8, stärker bevorzugt höchstens 1,5, noch bevorzugter höchstens 1 und am bevorzugtesten höchstens 0,5. Die Erfinder beobachteten, dass durch einen Überschuss der kostengünstigen Phosphorsäure die Bildungsrate von KHP noch erhöht werden kann.

Unter Chelatbildner werden erfindungsgemäß Stoffe verstanden, die zur Bildung von Chelaten befähigt sind. Chelate sind cyclische Koordinationsverbindungen, die mindestens ein zentrales Metallatom bzw. -ion und einen mehrzähnigen Ligand, den sogenannten Chelatliganden, aufweisen. Ein Ligand ist ein Ion oder Molekül, welches über eine koordinative Bindung an ein zentrales Metallatom bzw. -ion binden, d.h. koordinieren, kann. Die Abgrenzung der koordinativen Bindung zur klassischen kovalenten Bindung besteht darin, dass der Ligand bei der koordinativen Bindung beide Bindungselektronen zur Verfügung stellt, er ist daher eine "Lewis-Base". Mehrzähnig bedeutet in diesem Zusammenhang, dass der Ligand zwei oder mehr Koordinationsstellen aufweist, über die er an das Metallatom bzw. -ion koordiniert. In anderen Worten muss der Chelatligand also zwei oder mehr Atomgruppierungen aufweisen, die als Elektronendonatoren wirken können.

In einer bevorzugten Ausführungsform der Erfindung weist das Chelatligand drei oder mehr, bevorzugter vier oder mehr, besonders bevorzugt fünf oder mehr und am bevorzugtesten sechs oder mehr Koordinationsstellen auf.

Aus dem Chelatbildner entsteht beim Lösen oder Dispergieren in dem wässrigen Löse- oder Dispersionsmittel zumindest teilweise ein Chelatligand. Dieser kann geladen oder ungeladen sein.

Das zentrale Metallatom bzw. -ion weist Elektronenlücken auf, an die die Liganden mit ihren freien Elektronenpaaren koordinieren können, es ist daher eine "Lewis-Säure". Im Rahmen der Erfindung ist das Zentralatom bzw. -ion Kupfer, das in Schritt a) der Reaktion in der wässrigen Lösung oder Dispersion durch Hinzufügen der Kupfer(II)-Verbindung zur Verfügung gestellt wird.

Ohne an diese Theorie gebunden zu sein, gehen die Erfinder davon aus, dass durch die Zugabe des Chelatbildners in Schritt a) der Reaktion das Kupfer(II) der Kupfer(II)-Verbindung in der Lösung bzw. Suspension besser stabilisiert wird. Je nach Bindungsstärke der verschiedenen Chelatbildner wird die Stabilität des Kupfer(II) verschieden stark beeinflusst. Hierdurch wird die Umsetzung des Kupfer(II) in Schritt b) der Reaktion und damit auch die Kristallisation des Produkts beeinflusst. Dies ermöglicht die Herstellung von Kristallen mit bestimmter Morphologie und/oder spezifischer Oberfläche.

Die Bindungsstärke des Chelatbildners hängt im Wesentlichen von der Anzahl der Koordinationsstellen und dessen "Härte" ab.

Grundsätzlich gilt, dass die Bindungsstärke mit steigender Anzahl der Koordinationsstellen steigt. Chelatkomplexe sind stabiler als vergleichbare Komplexe mit einzähnigen, nicht untereinander verknüpften Liganden. Dieser "Chelat-Effekt" hat im Wesentlichen zwei Ursachen. Zum einen ist die Bildung von Chelatkomplexen entropisch vorteilhaft, weil die Anzahl der Moleküle im Laufe der Bildung des Chelatkomplexes zunimmt oder zumindest weniger stark abnimmt als bei der Bildung von vergleichbaren Komplexen mit einzähnigen Liganden. Daher ist die Zahl der Freiheitsgrade des Systems bei der Bildung von Chelatkomplexen höher.

Zum anderen kann sich ein Chelatligand erst nach Auflösung aller Bindungen vom Zentralatom entfernen, was bedeutet, dass der Chelatligand deutlich schwerer vom Metallatom bzw. -ion dissoziieren kann. Zudem ist ebenfalls die Wahrscheinlichkeit der sofortigen Rekombination nach der Spaltung erhöht. Damit sind Chelatkomplexe nicht nur thermodynamisch, sondern auch kinetisch stabiler als vergleichbare Komplexe mit einzähnigen Liganden. Die oben genannten Effekte sind umso stärker ausgeprägt, je mehr Koordinationsstellen der Chelatligand aufweist, über die er an das Kupfer(II)-Zentrum bindet.

Die Bindungsstärke hängt jedoch auch von der "Härte" des Chelatliganden ab. Gemäß HSAB-Prinzip ("principle of hard and soft acids and bases, R.G. Pearson") hängt die Bindungsstärke eines Lewis-Säure-Base-Komplexes von der Polarisierbarkeit des Zentralatoms und des Donoratoms des Liganden ab. Grundsätzlich gilt, dass Kombinationen von "harten" Säuren mit "harten" Basen, d.h. von Verbindungen mit schwer-polarisierbaren Molekülen bzw. Ionen höhere Komplexbildungskonstanten aufweisen, als Kombinationen von "harten" Säuren oder Basen mit "weichen" Säuren oder Basen. Dies ergibt sich daraus, dass diese "hart"-"hart" Bindungen einen stark ionischen Bindungscharakter aufweisen.

Auch "weich"-"weich" Kombinationen, d.h. Kombinationen von leicht-polarisierbaren Molekülen bzw. Ionen mit geringer Ladungsdichte, sind in der Regel ebenfalls stabiler, als die "gemischten" Kombinationen, da diese Bindungen einen stark kovalenten Charakter aufweisen.

Lewis-Säuren können nach ihrer Härte systematisch gegliedert werden. Diese bestimmt sich im Wesentlichen aus der Ladungsdichte, d.h. (partielle) Ladung geteilt pro Volumeneinheit des Ions/Moleküls. Weiche Säuren sind beispielsweise die einfach geladenen Nebengruppenelemente höherer Periode, wie Au⁺ oder Ag⁺.

Die Härte der Lewis-Basen ergibt sich im Wesentlichen aus der Härte der Donoratome. Diese ist umso höher, je kleiner und je elektronegativer und je höher oxidiert das Donoratom ist. Eine harte Lewis-Base ist vor diesem Hintergrund beispielsweise F-.

Die kleineren Übergangsmetalle mit zweifacher Ladung wie Fe²⁺ oder Cu²⁺ sind als Grenzfälle zwischen den klassischen harten Lewis-Säuren (z.B. Ti⁴⁺, Al³⁺) und den weichen Lewis-Säuren (z.B. Ag⁺, Hg²⁺) einzuordnen.

Aus der oben dargestellten Tatsache, dass Bindungen zwischen Molekülen/Ionen ähnlicher Polarisierbarkeit bevorzugt sind, folgt, dass Kupfer(II) bevorzugt Komplexe mit Lewis-Basen mit mittelharten Donoratomen (N, Cl) ausbildet.

Durch die Stabilisierung des Kupfer(II) der Kupfer(II)-Verbindung kann diese besser im Löse- bzw. Dispersionsmittel verteilt werden. An der Kupfer(II)-Verbindung anhaftende Verunreinigungen werden bei diesem Prozess ebenfalls suspendiert oder gehen in Lösung. Diese werden bei der Umsetzung in Schritt b) daher in geringerem Maße mitgefällt, als es der Fall wäre, wenn dem Reaktionsgemisch kein Komplexbildner zugesetzt werden würde. Deswegen werden Produkte mit höherer Reinheit erhalten. Das Kupfer(II)-hydroxid-phosphat aus dem erfindungsgemäßen Verfahren weist daher eine geringere Eigenfärbung und eine höhere Helligkeit auf.

In einer bevorzugten Ausführungsform der Erfindung werden dem Reaktionsgemisch mindestens zwei, vorzugsweise drei oder mehr, besonders bevorzugt fünf Chelatbildner zugesetzt. Die Erfinder haben herausgefunden, dass eine Kombination von Chelatbildnern unterschiedlicher Stoffklassen zu einem synergistischen Effekt führt. Besonders vorteilhaft ist die Kombination von Carbon- und Phosphorsäuren bzw. deren Derivate.

"Drucklos" bedeutet im erfindungsgemäßen Zusammenhang, dass der Druck im Reaktionsgefäß in Schritt b) den Normaldruck von 1 bar nicht oder nur zu höchstens 50% der Zeit der Umsetzung der Kupfer(II)-Verbindung mit der Phosphorsäure in dem Reaktionsgemisch, vorzugsweise zu höchstens 30% der Zeit der Umsetzung, noch bevorzugter zu höchstens 20% der Zeit der Umsetzung und am bevorzugtesten zu höchstens 10% der Zeit der Umsetzung signifikant, d.h. nicht mehr als 0,5 bar, überschreitet. Unter Zeit der Umsetzung wird dabei die Zeit verstanden, bis das Kupfer(II)-hydroxid-Phosphat erhalten wird, welches in Schritt c) vom Reaktionsgemisch abgetrennt wird. Weiterhin übersteigt die Umsetzungstemperatur in Schritt b) nicht signifikant, d.h. nicht mehr als 10°C, die Siedetemperatur des Löse- bzw. Dispersionsmittel. In Abgrenzung zur Solvo- bzw. Hydrothermalsynthese muss daher nicht in einem Druckgefäß gearbeitet werden.

### Schritt a)

In Schritt a) des Verfahrens wird ein Reaktionsgemisch aus einer wässrigen Lösung oder Dispersion einer Kupfer(II)-Verbindung und einer vorzugsweise mindestens stöchiometrischen Menge Phosphorsäure hergestellt. Dies kann dadurch geschehen, dass die Kupfer(II)-Verbindung zunächst in einem wässrigen Löse- bzw. Dispersionsmittel dispergiert wird. Das wässrige Löse- bzw. Dispersionsmittel weist auf dessen Gesamtgewicht bezogen mindestens 20 % Wasser auf, bevorzugt mindestens 40%, besonders bevorzugt mindestens 50%, noch bevorzugter mindestens 70 % und am bevorzugtesten mindestens 90%. In einer weiteren Ausführungsform besteht das wässrige Löse- zw. Dispersionsmittel aus Wasser. Das Löse- bzw. Dispersionsmittel kann als weiteren Bestandteil polare organische Lösemittel wie (mehrwertige) Alkohole oder Amine aufweisen. Besonders bevorzugt sind mehrwertige Alkohole als weitere Bestandteile.

In einer bevorzugten Ausführungsform der Erfindung wird zunächst die Kupfer(II)-Verbindung in dem wässrigen Löse- bzw. Dispersionsmittel gelöst bzw. suspendiert und erst im Anschluss die vorzugsweise mindestens stöchiometrische Menge Phosphorsäure zugegeben, sodass das Reaktionsgemisch entsteht.

In diesem Zusammenhang ist es besonders bevorzugt, wenn der Chelatbildner dem wässrigen Löse- bzw. Dispersionsmittel vor Zugabe der Phosphorsäure zugegeben wird. Hierdurch wird gewährleistet, dass die Kupfer(II)-Verbindung vollständig stabilisiert ist, bevor die Umsetzung mit Phosphorsäure in Schritt b) erfolgt. Die mit der Stabilisierung verbundenen vorteilhaften Effekte können dadurch maximiert werden.

Alternativ kann die vorzugsweise mindestens stöchiometrische Menge Phosphorsäure in dem wässrigen Löse- bzw. Dispersionsmittel gelöst bzw. suspendiert werden und hierzu im Anschluss die Kupfer(II)-Verbindung zugegeben werden.

In einer weiteren Ausführungsform der Erfindung werden die Phosphorsäure und die Kupfer(II)-Verbindung gleichzeitig dem Löse- bzw. Dispersionsmittel zugegeben, um das Reaktionsgemisch zu erhalten.

In einer weiteren Ausführungsform der Erfindung werden die Phosphorsäure und die Kupfer(II)-Verbindung in Teilmengen periodisch oder aperiodisch wechselnd dem Löse- bzw. Dispersionsmittel zugegeben, um das Reaktionsgemisch zu erhalten.

### Schritt b)

In Schritt b) reagiert die Kupfer(II)-Verbindung mit der Phosphorsäure in dem Reaktionsgemisch. Schritt a) und b) sind nicht zwangsläufig zeitlich getrennt, sondern können sich auch überschneiden. Die Umsetzung der Kupfer(II)-Verbindung mit der Phosphorsäure kann nämlich bereits bei Zugabe einer Teilmenge der Kupfer(II)-Verbindung und/oder der Phosphorsäure einsetzen.

In einer vorteilhaften Ausführungsform der Erfindung sind die Schritte a) und b) jedoch zeitlich getrennt, sodass Schritt b), also die Umsetzung der Kupfer(II)-Verbindung mit der Phosphorsäure, erst dann erfolgt, wenn die Kupfer(II)-Verbindung und die Phosphorsäure vollständig im Löse- bzw. Dispersionsmittel gelöst bzw. dispergiert sind. Dies kann insbesondere dadurch erreicht werden, dass das Reaktionsgemisch unterhalb der Temperatur gehalten wird, die für die Initiierung der Reaktion von Kupfer(II)-Verbindung und Phosphorsäure notwendig ist.

Die Trennung der Schritte a) und b) hat den Vorteil, dass die Umsetzung besser nachvollzogen und kontrolliert werden kann.

### Schritt c)

Im abschließenden Schritt wird das Kupfer(II)-hydroxid-phosphat aus dem Reaktionsgemisch abgetrennt. Dies kann mit Hilfe gängiger Abtrennungsverfahren geschehen. Besonders bevorzugt ist das Abtrennungsverfahren ausgewählt aus der Gruppe bestehend aus Filtration, Verdampfung, Zentrifugation, Sedimentation und Flotation.

Am bevorzugtesten ist das Abtrennungsverfahren die Filtration. Hierdurch können etwaige Verunreinigungen, die im Löse- bzw. Dispersionsmittel gelöst oder feindispergiert vorliegen, besonders effizient entfernt werden.

In einer bevorzugten Ausführungsform der Erfindung ist der Chelatbildner ausgewählt aus der Gruppe bestehend aus Amino-, Carbon-, Phosphor-, Schwefel- und Sulfonsäuren sowie deren Salze, Ester und Amide; mehrwertigen Alkoholen; Nitrilen; Bipyridinen; Phenantrolinen; mehrwertigen Phenolen; mehrwertigen Aminen; mehrwertigen Ethern; Lactamen; Oximen; Harnstoffderivaten; mehrwertigen Ketonen und Aldehyden wie Acetylacetonat (acac); Thiolen wie Dimercaptobernsteinsäure (DMSA); und Kombinationen der vorgenannten.

Da Kupfer(II) besonders bevorzugt stabile Komplexe mit Lewis-Basen mit mittelharten Donoratomen wie N oder Cl ausbildet, sind die Chelatbildner vorzugsweise solche, die als ein oder mehrere Donoratome Stickstoff aufweisen. Vorzugsweise sind die Chelatbildner daher ausgewählt aus der Gruppe bestehend aus Aminosäuren, Carbonsäureamiden, Nitrilen, Bipyridinen, Phenantrolinen, mehrwertigen Aminen, Harnstoffderivaten, Lactamen und Oximen.

Besonders bevorzugt ist der Chelatbildner ausgewählt aus der Gruppe bestehend aus Ethylendiamin (en), 2-(2-Aminoethylamino)ethanol (AEEA), Diethylentriamin (dien), Iminodiacetat (ida), Triethylentetramin (trien, TETA), Triaminotriethylamin (tren), Nitrilotriacetat (nta), Bis(salicyliden)ethylendiamin (salen), Ethylendiaminotriacetat (ted), Ethylendiamintetraacetat (EDTA), Diethylentriaminpentaacetat (DTPA), 1,4,7,10-Tetraazacyclododecan-1,4,7,10-tetraacetat (DOTA), Dimethylglyoxim (dmg), 8-Hydroxychinolin (oxin), 2,2'-Bipyridin (bpy), 1,10-Phenanthrolin (phen), Tetranatriumiminodisuccinat (IDHA), Methylglycindiessigsäure und Kombinationen der vorgenannten.

Durch den Zusatz von Lewis-Basen mit mittelharten Donoratomen wie N wird das Kupfer(II) der Kupfer(II)-Verbindung besonders gut im wässrigen Löse- bzw. Dispersionsmittel stabilisiert.

Hierdurch können Verunreinigungen besonders effizient abgetrennt werden, da durch die besonders ausgeprägte Stabilisierung des Kupfer(II) die Kupfer(II)-Verbindung besser im Löse- bzw. Dispersionsmittel verteilt wird und in Schritt b) Verunreinigungen in geringerem Maße mitgefällt werden.

In einer bevorzugten Ausführungsform der Erfindung ist die Kupfer(II)-Verbindung aus der Gruppe ausgewählt bestehend aus Kupfer(II)-hydroxid, Kupfer(II)-sulfat, Kupfer(II)-carbonat, basischem Kupfer(II)-carbonat, Kupfer(II)-halogeniden, und Kombinationen der vorgenannten. Besonders bevorzugt ist die Kupfer(II)-Verbindung ausgewählt aus Kupfer(II)-fluorid, Kupfer(II)-chlorid, Kupfer(II)-bromid, Kupfer(II)-hydroxid oder Kupfer(II)-Iodid und Kombinationen der vorgenannten. Am bevorzugtesten ist die Kupfer(II)-Verbindung Kupfer(II)-chlorid oder Kupfer(II)-hydroxid.

Kupfer(II)-hydroxid und Kupfer(II)-halogenide, insbesondere Kupfer(II)-chlorid, haben den Vorteil einer sehr guten Verfügbarkeit bei vergleichsweise geringen Einkaufspreisen.

Auch wenn die Kupfer(II)-Verbindung einen Bestandteil, insbesondere ein Anion, aufweist, das unter die Definition eines Chelatliganden fällt, so ist unter dem Zuführen einer solcher Kupfer(II)-Verbindung in Schritt a) nicht die erfindungsgemäße Zugabe eines Chelatbildners zu verstehen. In anderen Worten bedeutet dies, dass der Chelatbildner eine von der Kupfer(II)-Verbindung zu trennende zusätzliche Komponente des Reaktionsgemisches ist.

In einer bevorzugten Ausführungsform der Erfindung ist der Chelatbildner eine Aminosäure, deren Ester, Amid oder Salz. Besonders bevorzugt ist der Chelatbildner das Na-Salz einer Aminosäure. Dies ist vorteilhaft, da die Na-Salze von Aminosäuren in der Regel besonders gut im wässrigen Löse- bzw. Dispersionsmittel löslich sind. Aminosäuren haben den Vorteil, dass diese sowohl über die Carbonsäure- als auch über die Aminogruppe das Kupfer(II) der Kupfer(II)-Verbindung stabilisieren können. Durch die besonders ausgeprägte Stabilisierung kann sehr helles Kupfer(II)-hydroxid-phosphat mit geringer Eigenfärbung erhalten werden.

In einer bevorzugten Ausführungsform der Erfindung wird die Aminosäure vor Zugabe der Phosphorsäure zugegeben, wobei der pH-Wert der Reaktionsmischung vor Zugabe der Phosphorsäure kleiner pH 7 ist, vorzugsweise kleiner 5, noch bevorzugter kleiner 4 und am bevorzugtesten kleiner 3. Hierdurch wird verhindert, dass die Aminogruppe der Aminosäure in protonierter Form vorliegt und dadurch eine Koordination über die Aminogruppe nicht mehr möglich ist.

In einer besonders bevorzugten Ausführungsform der Erfindung handelt es sich bei der Aminosäure um eine proteinogene Aminosäure. Als proteinogen werden Aminosäuren bezeichnet, die in Lebewesen als Bausteine der Proteine während der Translation nach Vorgabe genetischer Information verwendet werden. Besonders bevorzugt sind die proteinogenen Aminosäuren ausgewählt aus der Gruppe bestehend aus Alanin, Asparagin, Cystein, Glutamin, Glycin, Histidin, Leucin, Lysin, Methionin, Prolin, Serin, Valin und Kombinationen der vorgenannten.

Proteinogene Aminosäuren sind in besonders hoher Reinheit kommerziell erhältlich. Hierdurch kann eine Verunreinigung des Kupfer(II)-hydroxid-phosphats durch an dem Chelatbildner anhaftende Fremdstoffe gering gehalten werden. Es wird daher besonders reines und helles Kupfer(II)-hydroxid-phosphat mit geringer Eigenfärbung erhalten.

Durch den Einsatz von Aminosäuren als Chelatbildner werden Kupfer(II)-hydroxid-phosphat Kristalle in länglicher Prismenform erhalten. Diese sind zu größeren länglichen Strukturen zusammengewachsen.

In einer weiteren bevorzugten Ausführungsform der Erfindung ist der Chelatbildner ausgewählt aus der Gruppe der Aminosulfonsäure, vorzugsweise aus der Gruppe bestehend aus Taurin und Sulfanilsäure sowie deren Salze und Ester.

In einer bevorzugten Ausführungsform der Erfindung ist der Chelatbildner eine Carbonsäure, deren Ester, Amid oder Salz. In einer bevorzugten Ausführungsform ist die Carbonsäure eine mehrwertige Carbonsäure, d.h. eine Carbonsäure mit mehreren Carbonsäuregruppen. Besonders bevorzugt ist die Carbonsäure eine Hydroxycarbonsäure, insbesondere eine Fruchtsäure. Besonders bevorzugt ist die Carbonsäure, Hydroxycarbonsäure oder deren Salz ausgewählt aus der Gruppe bestehend aus Ameisensäure, Essigsäure, Glycolsäure, Milchsäure, Benzoesäure, Oxalsäure, Weinsäure, Äpfelsäure, Citronensäure, Alkalimetallcitrate, insbesondere Mononatriumcitrat, Isocitronensäure, Trimesinsäure.

Hydroxycarbonsäuren haben den Vorteil, dass diese sowohl über die Carbonsäure- als auch über die Hydroxygruppe die Kupfer(II)-Verbindung im Löse- bzw. Dispersionsmittel stabilisieren können. Hierdurch sind die mit der Stabilisierung einhergehenden Vorteile besonders ausgeprägt.

In einer weiteren bevorzugten Ausführungsform der Erfindung ist der Chelatbildner ausgewählt aus der Gruppe der Saccharide, insbesondere aus der Gruppe der Mono-, Oligo- und Polysaccharide, einschließlich der Cyclodextrine.

Vorzugsweise sind die Saccharide ausgewählt aus der Gruppe bestehend aus Hexosen wie Glucose, Fructose, Mannose, Galactose, Pentosen wie Ribose, Xylose, Lactose, Maltose, Saccharose, Oligosacchariden, einschließlich der cyclischen Oligosaccharide wie α-, β-, γ- oder δ-Cyclodextrinen oder Polysachariden wie Alginaten.

Besonders bevorzugt ist der Chelatbildner ausgewählt aus der Gruppe bestehend aus Saccharose, Fructose und Galactose, am bevorzugtesten ist der Chelatbildner Saccharose.

Saccharide koordinieren an Kupfer(II) über die freien Elektronenpaare der OH-Gruppen. Da Saccharide eine Vielzahl von OH-Gruppen und damit von Koordinationsstellen aufweisen, können diese besonders gut das Kupfer(II) der Kupfer(II)-Verbindung stabilisieren.

Darüber hinaus weisen Saccharide in der Regel weder aromatische Molekülbestandteile noch Heteroatome wie S und P auf. Die Eigenfärbung von Sacchariden ist daher äußerst gering. Reste von Sacchariden, die nach der Reaktion im Produkt verbleiben, sorgen daher für keine signifikante Verfärbung des Produkts, sodass ein besonders helles Kupfer(II)-hydroxid-phosphat mit geringer Eigenfärbung erhalten wird.

In einer weiteren Ausführungsform der Erfindung ist der Chelatbildner ein Polyol, insbesondere ein Alditol, d.h. eine reduzierte Form eines Saccharids wie beispielsweise Mannit, Lactit, Sorbit, Xylit, Threit, Erythrit oder Arabit.

Durch den Einsatz von Sacchariden als Chelatbildner werden Kupfer(II)-hydroxid-phosphat Kristalle in Stäbchen-Form erhalten.

Die Erfinder konnten feststellen, dass durch den Zusatz von Chelatbildnern mit einer Vielzahl von Koordinationsstellen, d.h. mehr als 15 Koordinationsstellen, "Brokkoli"-artige Kristallstrukturen erhalten werden. Solche Chelatbildner sind beispielsweise Polyphosphate, Polyether wie Polyethylenglykole, Polyethylenoxide und Polypropylenglykole, Polyvinylpyrrolidon und Alginate.

In einer weiteren bevorzugten Ausführungsform ist der Chelatbildner ausgewählt aus der Gruppe bestehend aus Di- oder Polyphosphorsäure oder deren Salze. Vorzugsweise ist der Chelatbildner ausgewählt aus der Gruppe bestehend aus Alkaliphosphaten, Alkalimetaphosphaten und Alkalipolyphosphaten, ganz besonders bevorzugt K₅P₃O₁₀.

In einer weiteren bevorzugten Ausführungsform der Erfindung ist der Chelatbildner Ascorbinsäure. Die Erfinder haben herausgefunden, dass durch den Zusatz von Ascorbinsäure Kupfer(II)-hydroxid-phosphate mit besonders hoher spezifischer Oberfläche hergestellt werden können. Diese weisen eine spezifische Oberfläche von > 10 m²/g, bevorzugt > 15 m²/g, besonders bevorzugt > 20 m²/g, noch bevorzugter > 30 m²/g und am bevorzugtesten > 40 m²/g auf.

Ohne an diese Theorie gebunden zu sein, gehen die Erfinder davon aus, dass dies auf die leichte Oxidierbarkeit von Ascorbinsäure zurückzuführen ist, sodass semi-stabile Komplexe von Ascorbinsäure und Kupfer(II) in Schritten a) und/oder b) entstehen, die zu stark porösen Endprodukten führen. Vergleichbare Ergebnisse werden auch mit Zitronensäure und/oder deren Salzen, insbesondere in Kombination mit Phosphaten als weiterem Chelatbildner, erhalten.

In diesem Zusammenhang ist allerdings zu berücksichtigen, dass Zugabe von Ascorbin- und/oder Zitronensäure bzw. deren Salze nicht größer als 3 Gew.-%, bevorzugt nicht größer 2 Gew.-%, besonders bevorzugt nicht größer 1,5 Gew.-% und am bevorzugtesten nicht größer als 1 Gew.-% bezogen auf die Menge von Kupfer(II)-Verbindung sein sollte. Andernfalls kann die Phasenreinheit des Kupfer(II)-hydroxid-phosphats deutlich unter 100 % liegen.

In einer bevorzugten Ausführungsform der Erfindung ist der Chelatbildner ein Tensid, d.h. eine oberflächenaktive Substanz, die sowohl einen hydrophoben Molekülteil aufweist, der aus einem organischen Rest besteht als auch einen hydrophilen Molekülteil, der eine polare Gruppe aufweist, wobei diese vorzugsweise geladen ist.

In einer bevorzugten Ausführungsform ist das Tensid ein nichtionisches Tensid oder ein anionisches Tensid. Besonders bevorzugt weist der hydrophile Molekülteil eine Carboxylat-, Sulfonat-, Hydroxy-, Ether- oder Ethoxylatgruppe auf.

In einer weiteren bevorzugten Ausführungsform der Erfindung ist das Tensid ausgewählt aus der Gruppe bestehend aus kationischen Tensiden wie Tetraalkylammoniumsalzen wie Cetyltrimethylammoniumbromid oder Cetyltrimethylammoniumchlorid, anionischen Tensiden wie Alkylcarboxylaten und amphoteren Tensiden wie Betain.

Durch den Einsatz von Aminosäuren als Chelatbildner werden Kupfer(II)-hydroxid-phosphat Kristalle in länglicher Prismenform erhalten. Diese sind zu sternförmigen Strukturen zusammengewachsen.

Der Chelatbildner wird dem Reaktionsgemisch zugesetzt, um die Kupfer(II)-Verbindung zu stabilisieren. Regelmäßig ist hierfür nur eine geringe Konzentration an Chelatbildner nötig.

Da in der Regel zumindest ein Teil des Chelatbildners nach der Reaktion im Produkt verbleibt, kann dies zu einer Verfärbung des Produkts führen. Darüber hinaus ist eine zu hohe Menge von Chelatbildner auch aus Kostengründen zu vermeiden. Vorzugsweise beträgt die Summe an Chelatbildner, die dem Reaktionsgemisch in Schritt a) und/oder b) zugesetzt wird, daher nicht mehr als 5,0 Gew-%.

Allerdings hat eine zu geringe Menge von Chelatbildner den Nachteil, dass der stabilisierende Effekt nur gering ausgeprägt ist.

In einer bevorzugten Ausführungsform der Erfindung wird dem Reaktionsgemisch im Verfahrensschritt a) und/oder b) daher bezogen auf die Menge der Kupfer(II)-Verbindung 0,1 bis 5,0 Gew.-% des Chelatbildners zugesetzt.

Besonders bevorzugt wird der Chelatbildner in einer Menge von 0,5 bis 3,0 Gew.-%, bevorzugter in einer Menge von 1 bis 3,0 Gew.-% und am bevorzugtesten in einer Menge von 1 bis 2,0 Gew.-% zugesetzt.

Mit Hilfe des erfindungsgemäßen Verfahrens kann besonders reines Kupfer(II)-hydroxid-phosphat erhalten werden. Hierunter wird Kupfer(II)-hydroxid-phosphat mit einer Phasenreinheit > 90 %, bevorzugt > 95 %, bevorzugter > 98 %, besonders bevorzugt > 99 % und am bevorzugtesten > 99,5 % verstanden.

Die Phasenreinheit kann mit Hilfe von Röntgenstrukturanalyse folgendermaßen bestimmt werden.

Die quantitative Phasenbestimmung erfolgt mittels Rietveld Methode wie in "Quantitative phase analysis using the Rietveld method", D. L. Bish and S. A. Howard, J. Appl. Cryst. (1988). 21, 86-91 oder dem Lehrbuch "The Rietveld Method", Kapitel 1, "Introduction to the Rietveld method", R.A. Young, ed., Oxford University Press (1995) ausführlich beschrieben. Vorzugsweise erfolgt die Analyse mit Hilfe einer Musteranalysesoftware wie dem Programm Topas der Firma Bruker.

In einer weiteren bevorzugten Ausführungsform der Erfindung weist das im Verfahrensschritt c) gewonnene Kupfer(II)-hydroxid-phosphat im L*a*b*-Farbraum (CIELAB) einen L-Wert von > 78, bevorzugt > 80, besonders bevorzugt > 82, noch bevorzugter > 85 und am bevorzugtesten > 87 auf.

Der L*a*b*-Farbraum nach DIN EN ISO 11664-4 dient zur Charakterisierung aller wahrnehmbaren Farben. In dem dreidimensionalen L*a*b*-Farbraum ist der Helligkeitswert L* senkrecht auf der planaren Farbebene (a*, b*) angeordnet.

Auf der a*-Achse liegen die Farben Grün und Rot gegenüber, wohingegen die b*Achse Blau und Gelb trennt. Komplementäre Farben stehen sich also um 180° gegenüber. Die L*-Achse definiert die Helligkeit der Farbe und umfasst Werte von 0 bis 100, wobei 100 die höchste Helligkeit darstellt.

Zu den wichtigsten Eigenschaften des L*a*b*-Farbmodells zählen die Geräteunabhängigkeit und die Wahrnehmungsbezogenheit. In anderen Worten werden Farben also unabhängig von der Art ihrer Erzeugung oder Wiedergabetechnik so definiert, wie sie von einem Normalbeobachter bei einer Standard-Lichtbedingung wahrgenommen werden.

Im Rahmen der vorliegenden Erfindung wurden die L*a*b*-Werte wie folgt bestimmt.

Die Bestimmung der L*a*b*-Werte erfolgte mit Hilfe eines UltraScan VIS Spektralphotometers der Firma HunterLab. Die Proben wurden hierzu in eine Glasküvette gefüllt und durch Anstoßen der Küvette oder Verdichten der Probe eine homogene Fläche an der Küvettenseite zur Messöffnung erzeugt.

In einer weiteren bevorzugten Ausführungsform der Erfindung besteht das im Verfahrensschritt c) gewonnene Kupfer(II)-hydroxid-phosphat aus Partikeln, die nach Bestimmung mit Laserstreuanalyse nach DIN-ISO 13320-1 einen Korngrößenmedian im Bereich von 2 bis 10 µm, bevorzugt von 2 bis 8 µm, besonders bevorzugt von 2 bis 7 µm, noch bevorzugter von 2 bis 6 µm und am bevorzugtesten von 2 bis 5 µm aufweisen.

Im Rahmen der vorliegenden Erfindung wurden die Korngrößen entsprechend der aktuell gültigen DIN-ISO 13320-1 bestimmt. Hierzu wird eine Probe des hergestellten Produkts in einem Dispersionsmedium (2-Propanol oder eine Lösung von Tetranatriumpyrophosphat in entmineralisiertem Wasser, 14 mmol/L) dispergiert und mit einem Horiba LA-950V in einem Messbereich von 0,01 µm bis 3000 um nass vermessen.

In einer weiteren bevorzugten Ausführungsform der Erfindung besteht das im Verfahrensschritt c) gewonnene Kupfer(II)-hydroxid-phosphat aus Partikeln, die stäbchenförmig sind, wobei das Aspektverhältnis im Bereich von 1:3 bis 1:10 liegt.

Unter Aspektverhältnis wird erfindungsgemäß das Verhältnis der größten länglichen Ausdehnung des Partikels zu seiner kleinsten Ausdehnung verstanden.

Die Erfindung betrifft weiterhin Kupfer(II)-hydroxid-phosphat, welches durch das erfindungsgemäße Verfahren erhältlich ist, wobei das Kupfer(II)-hydroxid-phosphat im L*a*b*-Farbraum (CIELAB) einen L-Wert von > 78, bevorzugt > 80, besonders bevorzugt > 82, noch bevorzugter > 85 und am bevorzugtesten > 87 aufweist.

Die Erfindung betrifft weiterhin die Verwendung eines Chelatbildners bei der Erzeugung von Kupfer(II)-hydroxid-phosphat durch Umsetzung einer Kupfer(II)-Verbindung mit Phosphorsäure zur Veränderung der Kristalleigenschaften des erzeugten Kupfer(II)-hydroxid-phosphat.

### BEISPIELE

Die Erfindung wird nun anhand von konkreten Ausführungsformen von erfindungsgemäßen Herstellungsbeispielen erläutert.

### Ausgangsstoffe:

| **Name** | **Hersteller** | **Reinheit/Mₙ** | **CAS** |
|---|---|---|---|
| Kupfer(II)-hydroxid | VWR | >98% | 20427-59-2 |
| Phosphorsäure | Chemische Fabrik Budenheim | ≥ 75 Gew-% | 7664-38-2 |

### Messmethoden:

### Korngrößenbestimmung Media, D10, D90

Die Partikelgrößenverteilungen wurden sowohl volumen- als auch partikelgrößenbasiert an einem Horiba Partica LA-950V (Horiba, Ltd.; Kyoto; Japan) durch dynamische Lichtstreuung bestimmt. Hierzu wird eine Probe des hergestellten Produkts in einem Dispersionsmedium (2-Propanol oder eine Lösung von Tetranatriumpyrophosphat in entmineralisiertem Wasser, 14 mmol/L) dispergiert und mit einem Horiba LA-950V in einem Messbereich von 0,01 µm bis 3000 µm nass vermessen.

### Phasenreinheit

Die Phasenreinheit wird mit Hilfe von Röntgenstrukturanalyse bestimmt. Von den gemäß den nachfolgenden Beispielen hergestellten Produkten wurden Röntgenbeugungsmessungen (XRD) an einem Diffraktometer des Typs D8 Advance A25 (Firma Bruker) unter Verwendung von CuK_{α}-Strahlung durchgeführt. Die quantitative Phasenbestimmung erfolgt per Rietveld Methode (vgl. "Quantitative phase analysis using the Rietveld method", D. L. Bish and S. A. Howard, J. Appl. Cryst. (1988). 21, 86-91 oder dem Lehrbuch "The Rietveld Method", Kapitel 1, "Introduction to the Rietveld method", R.A. Young, ed., Oxford University Press (1995)) mit Hilfe des Musteranalyseprogramms Topas 4.2. der Firma Bruker.

### L*a*b*-Werte

Die Bestimmung der L*a*b*-Werte erfolgte mit Hilfe eines UltraScan VIS-2 Spektralphotometers ausgestattet mit dem Ultra Sensor VIS Sensor der Firma HunterLab. Die Proben wurden hierzu in eine Glasküvette gefüllt und durch Anstoßen der Küvette oder Verdichten der Probe eine homogene Fläche an der Küvettenseite zur Messöffnung erzeugt. Die zugehörige Software Easy Match QC 4.64 benutzt die Einstellungen "USVIS 1145" Sensor und "RSIN Mode" und berechnet die LAB Werte.

Die Methode erfolgt entsprechend der aktuell gültigen Version der EN ISO 11664-4.

### Spezifische Oberfläche

Die spezifische Oberfläche wurde nach dem BET-Verfahren durch N₂-Absorption (DIN ISO 9277) an einem BELSORP-mini Gerät der Firma BEL bestimmt. Es wurde Stickstoff mit einer Reinheit von 99,999% verwendet.

### Rasterelektronenmikroskopie

Für Rasterelektronenmikroskop- (REM) Aufnahmen wurde ein REM-Spektrometer Sigma EVO der Firma Zeiss in Kombination mit einem EDX Detektor INCA Energy 350 der Firma Oxford verwendet.

### Allgemeine Versuchsbeschreibung

In 2250 ml destilliertem Wasser werden 150 g Cu(OH)₂ (1,54 mol) suspendiert, wodurch eine blau gefärbte Suspension entsteht. Diese wird auf 90°C erhitzt, 120 g Phosphorsäure (75 Gew-%, 0,92 mol) und die Menge eines oder mehrerer Additive gemäß Tabelle 1 zugesetzt und die Reaktionsmischung zum Sieden erhitzt. Nach 15 Minuten wird das Rohprodukt abfiltriert, in 1000 ml Wasser resuspendiert, erneut filtriert und über Nacht bei 105°C im Trockenschrank getrocknet.

**Tabelle 1:**

| **#** | **Additiv** | **Gw. [%]** | **L*** | **a*** | **b*** | **Δ a-b** | **OF [m²/g]** | **D10 [µm]** | **D50 [µm]** | **D90 [µm]** | **Pur [%]** | **Form** |
|---|---|---|---|---|---|---|---|---|---|---|---|---|
| 0 | - | - | 75,8 | -4,1 | 10,6 | 14,7 | n.b. | 3,1 | 5,8 | 9,7 | 100 | LP^{[3]} |
| 1 | Na₅P₃O₁₀ | 1 | 82,9 | -10,2 | 9,3 | 19,5 | 0,6 | 3,8 | 6,1 | 9,6 | 100 | LP^{[3]} |
| 2 | Glycin | 0,5 | 86,8 | -7,7 | 5,2 | 12,9 | 3,3 | 1,1 | 3,1 | 5,8 | 100 | LP^{[3]} |
| 3 | Glycin | 1 | 87,3 | -7,49 | 4,78 | 12,3 | 3,9 | 0,8 | 2,6 | 5,4 | 100 | LP^{[3]} |
| 4 | Taurin | 1 | 86,7 | -6,6 | 6,6 | 13,2 | 2,2 | 1,4 | 3,7 | 6,7 | 100 | ST^{[4]} |
| 5 | CTAB^{[1]} | 1 | 87 | -6,1 | 6,9 | 13,0 | 1,4 | 1,7 | 4,4 | 8,2 | 100 | ST^{[4]} |
| 6 | Saccharose | 0,2 | 84,7 | -4,7 | 7,7 | 12,4 | n.b. | 1,6 | 3,8 | 6,9 | 100 | n.b.^{[5]} |
| 7 | Saccharose | 1 | 85,7 | -5,7 | 6,4 | 12,1 | n.b. | 1,6 | 4,4 | 8,1 | 100 | LP^{[3]} |
| 8 | PEG-400 | 1 | 84,8 | -6,0 | 8,0 | 14 | 1,5 | 3,4 | 6,4 | 10,9 | 100 | LP^{[3]} |
| 9 | PEG-6000 | 1 | 85,9 | -6,7 | 7,4 | 14,4 | 1,7 | 2,9 | 6,7 | 12,1 | 100 | LP^{[3]} |
| 10 | Na₃P₃O₉ | 1 | 83,3 | -6,6 | 7,9 | 14,5 | n.b. | 2,8 | 4,7 | 7,2 | 100 | LFP^{[2]} |
| 11 | Na₃P₃O₉+ NaCitrat | 1 0,5 | 91,9 | -5,0 | 2,6 | 7,5 | 5,53 | 0,3 | 2,4 | 5,5 | 100 | LP^{[3]} |

| | | | | | | | | | | | | |
|---|---|---|---|---|---|---|---|---|---|---|---|---|
| ^{[1]} Cetyltrimethyl-ammonium-bromid ^{[2]} LFP = längliche Prismen, stark fragmentiert (besteht aus vielen längs zusammengewachsenen Kristallen), teilweise zusammengewachsen ^{[3]} LP = längliche Prismen, teilweise zusammengewachsen ^{[4]} ST = Sterne aus länglich zusammengewachsenen Kristallen ^{[5]} n.b. = nicht bestimmt | | | | | | | | | | | | |

## Patentansprüche

1. Verfahren zur Herstellung von Kupfer(II)-hydroxid-phosphat mit den folgenden Verfahrensschritten:
a) Erzeugung eines Reaktionsgemisches aus einer wässrigen Lösung oder Dispersion einer Kupfer(II)-Verbindung und einer vorzugsweise mindestens stöchiometrischen Menge Phosphorsäure, wobei mindestens stöchiometrisch bedeutet, dass die Stoffmenge von Kupfer(II)-Ionen der Kupfer(II)-Verbindung zu Stoffmenge Phosphorsäure im Reaktionsgemisch höchstens 2 beträgt,
b) Umsetzung der Kupfer(II)-Verbindung mit der Phosphorsäure in dem Reaktionsgemisch und
c) Abtrennung von Kupfer(II)-hydroxid-phosphat aus dem Reaktionsgemisch,
wobei die Umsetzung in Schritt b) drucklos erfolgt,
**dadurch gekennzeichnet ist, dass**
dem Reaktionsgemisch im Verfahrensschritt a) und/oder b) mindestens ein Chelatbildner zugesetzt wird.

2. Verfahren nach Anspruch 1, **dadurch gekennzeichnet, dass** der mindestens eine Chelatbildner aus der Gruppe ausgewählt ist bestehend aus Amino-, Carbon-, Phosphor-, Schwefel- und Sulfonsäuren sowie deren Salze, Ester und Amide; mehrwertigen Alkoholen; Nitrilen; Bipyridinen; Phenantrolinen; mehrwertigen Phenolen; mehrwertigen Aminen; mehrwertigen Ethern; Lactamen; Oximen; Harnstoffderivaten; mehrwertigen Ketonen und Aldehyden wie Acetylacetonat, Thiolen; und Kombinationen der vorgenannten.

3. Verfahren nach einem der vorausgehenden Ansprüche, **dadurch gekennzeichnet, dass** die Kupfer(II)-Verbindung aus der Gruppe ausgewählt ist bestehend aus Kupfer(II)-hydroxid, Kupfer(II)-sulfat, Kupfer(II)-carbonat, Basischem Kupfer(II)-carbonat, Kupfer(II)-halogeniden, vorzugsweise Kupfer(II)-chlorid und Kupfer(II)-bromid und Kombinationen der vorgenannten.

4. Verfahren nach einem der vorausgehenden Ansprüche, **dadurch gekennzeichnet, dass** der mindestens eine Chelatbildner eine Aminosäure oder deren Salz, vorzugsweise deren Na-Salz ist, wobei die Aminosäure aus der Gruppe der proteinogenen Aminosäuren ausgewählt ist.

5. Verfahren nach einem der vorausgehenden Ansprüche, **dadurch gekennzeichnet, dass** der mindestens eine Chelatbildner eine Carbonsäure, Hydroxycarbonsäure oder deren Salz ist, wobei die Carbonsäure oder Hydroxycarbonsäure aus der Gruppe ausgewählt ist bestehend aus Ameisensäure, Essigsäure, Glycolsäure, Milchsäure, Benzoesäure, Oxalsäure, Weinsäure, Äpfelsäure, Citronensäure, Isocitronensäure, Trimesinsäure und Kombinationen der vorgenannten.

6. Verfahren nach einem der Ansprüche 1-4, **dadurch gekennzeichnet, dass** der mindestens eine Chelatbildner ein Saccharid ist, das aus der Gruppe ausgewählt ist bestehend aus Mono- und Oligosacchariden.

7. Verfahren nach einem der vorausgehenden Ansprüche, **dadurch gekennzeichnet, dass** der mindestens eine Chelatbildner Ascorbinsäure ist.

8. Verfahren nach einem der vorausgehenden Ansprüche, **dadurch gekennzeichnet, dass** der mindestens eine Chelatbildner ein Tensid ist, das vorzugsweise aus der Gruppe ausgewählt ist bestehend aus anionischen Tensiden und nichtionischen Tenside.

9. Verfahren nach einem der vorausgehenden Ansprüche, **dadurch gekennzeichnet, dass** der mindestens eine Chelatbildner in einer Gesamtmenge an Chelatbildnern von 0,1 bis 5,0 Gew.-% bezogen auf die Menge der Kupfer(II)-Verbindung zugesetzt wird.

10. Kupfer(II)-hydroxid-phosphat erhältlich durch ein Verfahren nach den Ansprüchen 1-9, **dadurch gekennzeichnet, dass** das Kupfer(II)-hydroxid-phosphat im L*a*b*-Farbraum einen L-Wert von > 78 aufweist.

11. Verwendung eines Chelatbildners bei der Erzeugung von Kupfer(II)-hydroxid-phosphat durch Umsetzung einer Kupfer(II)-Verbindung mit Phosphorsäure zur Veränderung der Kristalleigenschaften des erzeugten Kupfer(II)-hydroxid-phosphats.

## Claims

1. Method for preparing copper(II) hydroxide phosphate having the following method steps:
a) producing a reaction mixture from an aqueous solution or dispersion of a copper(II) compound and a preferably at least stoichiometric amount of phosphoric acid, wherein at least stoichiometric means that the quantity of copper(II) ions of the copper(II) compound in relation to the quantity of phosphoric acid in the reaction mixture is at most 2,
b) converting the copper(II) compound with the phosphoric acid in the reaction mixture and
c) separating copper(II) hydroxide phosphate off from the reaction mixture,
wherein the conversion in step b) is effected in an unpressurized manner,
**characterized in that**
at least one chelating agent is added to the reaction mixture in method step a) and/or b).

2. Method according to claim 1, **characterized in that** the at least one chelating agent is selected from the group consisting of amino, carboxylic, phosphoric, sulfuric and sulfonic acids and the salts, esters and amides thereof; polyvalent alcohols; nitriles; bipyridines; phenanthrolines; polyvalent phenols; polyvalent amines; polyvalent ethers; lactams; oximes; urea derivatives; polyvalent ketones and aldehydes such as acetylacetonate; thiols; and combinations of the aforementioned.

3. Method according to one of the preceding claims, **characterized in that** the copper(II) compound is selected from the group consisting of copper(II) hydroxide, copper(II) sulfate, copper(II) carbonate, basic copper(II) carbonate, copper(II) halides, preferably copper(II) chloride and copper(II) bromide; and combinations of the aforementioned.

4. Method according to one of the preceding claims, **characterized in that** the at least one chelating agent is an amino acid or a salt thereof, preferably the Na salt thereof, wherein the amino acid is selected from the group of proteinogenic amino acids.

5. Method according to one of the preceding claims, **characterized in that** the at least one chelating agent is a carboxylic acid, a hydroxycarboxylic acid or a salt thereof, wherein the carboxylic acid or hydroxycarboxylic acid is selected from the group consisting of formic acid, acetic acid, glycolic acid, lactic acid, benzoic acid, oxalic acid, tartaric acid, malic acid, citric acid, isocitric acid, trimesic acid and combinations of these.

6. Method according to one of claims 1-4, **characterized in that** the at least one chelating agent is a saccharide selected from the group consisting of mono- and oligosaccharides.

7. Method according to one of the preceding claims, **characterized in that** the at least one chelating agent is ascorbic acid.

8. Method according to one of the preceding claims, **characterized in that** the at least one chelating agent is a surfactant, preferably selected from the group consisting of anionic surfactants and non-ionic surfactants.

9. Method according to one of the preceding claims, **characterized in that** the at least one chelating agent is added in a total amount of chelating agents of from 0.1 to 5.0 wt.-% in relation to the amount of the copper(II) compound.

10. Copper(II) hydroxide phosphate obtainable by a method according to claims 1-9, **characterized in that** the copper(II) hydroxide phosphate has an L value in the L*a*b* colour space of > 78.

11. Use of a chelating agent in the production of copper(II) hydroxide phosphate by converting a copper(II) compound with phosphoric acid in order to change the crystal properties of the produced copper(II) hydroxide phosphate.

## Revendications

1. Procédé de production de phosphate d'hydroxyde de cuivre (II) comprenant les étapes de procédé ci-après consistant à :
a) préparer un mélange réactionnel à partir d'une solution ou d'une dispersion aqueuse d'un composé de cuivre (II) et d'une quantité de manière préférée au moins stœchiométrique d'acide phosphorique, « au moins stoechiométrique » signifiant que la quantité d'ions cuivre (II) du composé de cuivre (II) par rapport à la quantité d'acide phosphorique dans le mélange réactionnel ne dépasse pas 2,
b) faire réagir le composé de cuivre (II) avec l'acide phosphorique dans le mélange réactionnel, et
c) séparer le phosphate d'hydroxyde de cuivre (II) du mélange réactionnel,
dans lequel la réaction de l'étape b) intervient à pression atmosphérique,
**caractérisé en ce que**
au moins un agent chélatant est ajouté au mélange réactionnel à l'étape de procédé a) et/ou b).

2. Procédé selon la revendication 1, **caractérisé en ce que** l'agent chélatant, au moins au nombre de un, est choisi dans le groupe constitué par les acides aminés, carboxyliques, phosphoriques, sulfuriques et sulfoniques ainsi que leurs sels, esters et amides ; les polyalcools ; les nitriles ; les bipyridines ; les phénantrolines ; les polyphénols ; les polyamines ; les polyéthers ; les lactames ; les oximes ; les dérivés de l'urée ; les polycétones et les aldéhydes tels que l'acétylacétonate, les thiols ; et leurs combinaisons.

3. Procédé selon l'une des revendications précédentes, **caractérisé en ce que** le composé de cuivre (II) est choisi dans le groupe constitué par l'hydroxyde de cuivre (II), le sulfate de cuivre (II), le carbonate de cuivre (II), le carbonate de cuivre (II) basique, les halogénures de cuivre (II), de manière préférée le chlorure de cuivre (II) et le bromure de cuivre (II), ainsi que leurs combinaisons.

4. Procédé selon l'une des revendications précédentes, **caractérisé en ce que** l'agent chélatant, au moins au nombre de un, est un acide aminé ou son sel, de manière préférée son sel de Na, l'acide aminé étant choisi dans le groupe des acides aminés protéinogènes.

5. Procédé selon l'une des revendications précédentes, **caractérisé en ce que** l'agent chélatant, au moins au nombre de un, est un acide carboxylique, un acide hydroxycarboxylique ou son sel, l'acide carboxylique ou l'acide hydroxycarboxylique étant choisi dans le groupe constitué par l'acide formique, l'acide acétique, l'acide glycolique, l'acide lactique, l'acide benzoïque, l'acide oxalique, l'acide tartrique, l'acide malique, l'acide citrique, l'acide isocitrique, l'acide trimésique et leurs combinaisons.

6. Procédé selon l'une des revendications 1 à 4, **caractérisé en ce que** ledit agent chélatant, au moins au nombre de un, est un saccharide choisi dans le groupe constitué par les monosaccharides et les oligosaccharides.

7. Procédé selon l'une des revendications précédentes, **caractérisé en ce que** l'agent chélatant, au moins au nombre de un, est l'acide ascorbique.

8. Procédé selon l'une des revendications précédentes, **caractérisé en ce que** l'agent chélatant, au moins au nombre de un, est un tensioactif, qui est de manière préférée choisi dans le groupe constitué par des tensioactifs anioniques et des tensioactifs non ioniques.

9. Procédé selon l'une des revendications précédentes, **caractérisé en ce que** l'agent chélatant, au moins au nombre de un, est ajouté dans une quantité totale d'agents chélatants comprise entre 0,1 et 5,0 % en poids par rapport à la quantité de composé de cuivre (II).

10. Phosphate d'hydroxyde de cuivre (II) pouvant être obtenu par un procédé selon les revendications 1 à 9, **caractérisé en ce que** le phosphate d'hydroxyde de cuivre (II) présente une valeur L > 78 dans l'espace chromatique CIELAB.

11. Utilisation d'un agent chélatant dans la production de phosphate d'hydroxyde de cuivre (II) par la réaction d'un composé de cuivre (II) avec de l'acide phosphorique afin de modifier les propriétés cristallines du phosphate d'hydroxyde de cuivre (II) produit.
